# EUROPÄISCHE PATENTSCHRIFT

(11) **EP 1 362 967 B1**
(45) Veröffentlichungstag und Bekanntmachung des Hinweises auf die Patenterteilung: **31.08.2005**
(21) Anmeldenummer: 02405398.5
(22) Anmeldetag: 16.05.2002
(51) Int. Cl.: E04D 3/40, H01L 31/042

(54) **Vorrichtung mit flachen, plattenförmigen Bauelementen**
Device with flat, panel shaped building elements
Dispositif comprenant des éléments de construction plats, en forme de plaques

(43) Veröffentlichungstag der Anmeldung: 19.11.2003
(73) Patentinhaber: Swiss Sustainable Systems AG, 3006 Bern (CH)
(72) Erfinder: Szacsvay, Tamas, 3007 Bern (CH)
(74) Vertreter: Secklehner, Günter

(56) Entgegenhaltungen:
- EP-A- 0 960 990
- DE-U- 29 912 699
- NL-C- 1 002 425
- US-A- 5 571 338
- US-A- 5 642 596
- PATENT ABSTRACTS OF JAPAN vol. 1999, no. 01, 29. Januar 1999 (1999-01-29) -& JP 10 280629 A (KAWAKAMI TOSHIO), 20. Oktober 1998 (1998-10-20)

## Beschreibung

Die Erfindung betrifft eine Vorrichtung mit flachen, plattenförmigen Bauelementen, insbesondere zur Verkleidung von Schrägdächern oder Fassaden, bei der Reihen von untereinander angeordneten, sich schuppenartig überlappenden Bauelementen befestigt sind, wobei jeweils im Bereich zwischen nebeneinander liegenden Reihen von Bauelementen unterhalb der Bauelemente ein Profil angeordnet ist, welches einen nach oben offenen Kanal bildet, um neben den Bauelementen abfliessendes Wasser aufzunehmen und abzuleiten und wobei das Profil sägezahnartig geformte seitliche Teile aufweist, auf denen die Bauelemente in ihrer schuppenartigen Anordnung aufliegen.

Bekannte Ziegel haben seitliche, nach unten ragende Nasen und bilden mit dem benachbarten Ziegel einen Rinne zum Ableiten von Regen- oder Schmelzwasser. Wenn Dächer oder Fassaden anstelle von Ziegeln mit flachen, plattenförmigen Bauelementen abgedeckt werden sollen, müssen diese einander so überlappen, dass Wasser nicht zwischen den Bauelementen hindurchfliessen kann. Wenn die Bauelemente photovoltaische Elemente enthalten, geht durch die Überlappungen Fläche verloren, die nicht der Sonne ausgesetzt ist. Wenn zudem die Bauelemente an ihren Überlappungsbereichen aufeinander liegen, besteht die Gefahr von Beschädigungen der photovoltaischen Elemente und das Auswechseln der Bauelemente wird erschwert oder verunmöglicht.

Die internationale Patentanmeldung WO 97/37091 zeigt ein Trägerelement zum Befestigen eines plattenförmigen Bauelementes auf einem Schrägdach. Das Trägerelement weist Abstandhalter auf, die es erlauben, plattenförmige Bauelemente in schuppenartiger Anordnung zu halten. Jedoch finden sich in diesem Dokument keine Hinweise darauf, wie Wasser von einem solchermassen konstruierten Dach abgeleitet wird. Bei der internationalen Patentanmeldung WO 01/54205 geht es ebenfalls um die Anordnung plattenförmiger Bauelemente auf einem Dach und es wird vorgeschlagen, die Stellen zwischen an denen benachbarten Bauelementen abzudichten. Auch in der internationalen Patentanmeldung EP 0710 750 werden Dichtungsmassnahmen für plattenförmige Bauelemente beschrieben.

In der Publikation JP 10 280 629 A wird eine Dachstruktur nach dem Oberbegriff des Anspruchs 1 beschrieben, bei der sich schuppenartig überlappende, plattenförmige Elemente durch Profile getragen werden, die einen nach oben offenen Kanal bilden und sägezahnartig geformte seitliche Teile aufweisen, auf denen die Elemente aufliegen.

Ausgehend von diesem Stand der Technik liegt der Erfindung die Aufgabe zugrunde, eine Vorrichtung mit flachen, plattenförmigen Bauelementen vorzuschlagen, die einen einfachen Aufbau aufweist und bei der das Profil einfach anpassbar ist.

Diese Aufgabe wird nach einer ersten Alternative erfindungsgemäss dadurch gelöst, dass die sägezahnartig geformten seitlichen Teile in im Profil vorgesehenen Längsnuten aufgenommen sind.

Nach einer zweiten Alternative wird die Aufgabe erfindungsgemäss dadurch gelöst, dass die sägezahnartig geformten seitlichen Teile Längsnuten aufweisen, mit denen sie auf das Profil aufgesteckt sind.

Diese erfindungsgemässen Lösungen haben insbesondere den Vorteil, dass die sägezahnartig geformten seitlichen Teile separat bearbeitet werden können und dadurch das Profil besonders einfach anpassbar ist. Es können grössere Mengen des Profils an Lager gehalten und diese in Abhängigkeit von der Dicke der Bauelemente mit seitlichen Teilen ausgestattet werden, bei denen die Höhe der Zähne" dieser Dicke angepasst sind.

Nach einer Ausführungsart der Erfindung können die sägezahnartig geformten seitlichen Teile aus Gummi oder Kunststoff bestehen.

Nach einer besonderen Ausführungsart der Erfindung hat das Profil einen von einem Profilboden nach oben abragenden Steg, vorzugsweise in der Mitte. Durch diesen Steg wird einerseits das Profil steifer, andererseits verhindert der Steg, dass sich benachbarte Bauelemente berühren.

Das Profil besteht dabei vorzugsweise aus glasfaserverstärktem Kunststoff und ist durch Poltrudieren hergestellt.

Das Profil kann aber auch aus Metallblech bestehen und durch Abkanten hergestellt sein.

Nach einer besonderen Ausführungsart der Erfindung liegen die Profile auf mindestens annähernd rechtwinklig zu ihnen verlaufenden Trägern, beispielsweise auf gewöhnlichen Dachlatten auf und es sind Haken vorgesehen, die mit einem Ende an einem der Träger befestigt sind und mit dem anderen Ende den unteren Rand eines Bauelementes umgreifen. Der umgreifende Teil des Hakens behindert eine direkte Berührung schuppenartig übereinander liegender Bauelemente.

Nach einer besonders bevorzugten Ausführungsart der Erfindung ist mindestens ein Teil der Bauelemente als photovoltaische Elemente ausgebildet oder enthält solche. Bei einem so entstehenden Solardach oder einer Solarfassade gewinnen die genannten Vorteile der Erfindung zusätzlich an Bedeutung.

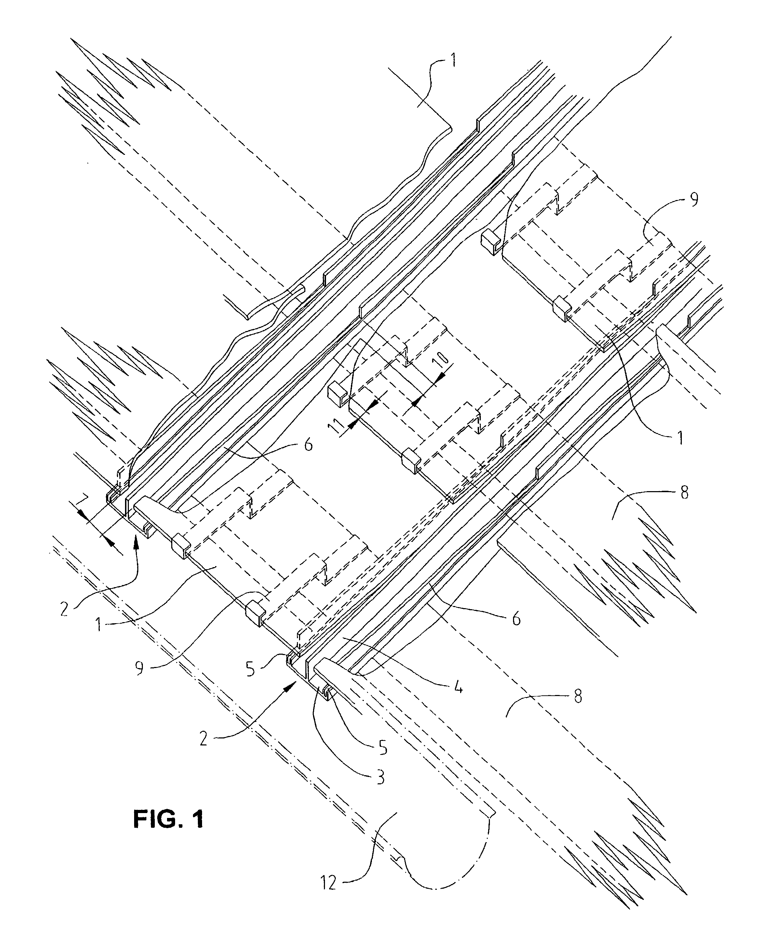

Eine besondere Ausführungsart der Erfindung wird nachstehend unter Bezugnahme auf die beiliegende Zeichnung beispielsweise näher erläutert.

Die einzige Figur der Zeichnung zeigt in einer perspektivischen Ansicht von oben einen Ausschnitt aus einem Dach, das mit flachen Platten 1 gedeckt ist. Diese Platten 1 können photovoltaische Elemente enthalten oder aus solchen bestehen. Die Platten 1 überlappen sich in vertikaler Richtung, sind also schuppenartig und in Reihen angeordnet. In horizontaler Richtung sind die Platten 1 mit einem geringen Abstand 7 nebeneinander angeordnet. Zwecks besserer Sichtbarkeit der die Platten 1 tragenden Elemente sind in der Figur Randbereiche der Platten abgeschnitten dargestellt. Im Bereich ihrer seitlichen Ränder ist jede Platte 1 durch ein Profil 2 gestützt, das im folgenden näher beschrieben wird.

Das Profil 2 weist einen Profilboden 3 auf und ist auf beiden Seiten durch vertikal nach oben ragende Seitenstege 5 begrenzt, wodurch ein nach oben offener Kanal zur Ableitung von Wasser gebildet wird. Die Seitenstege 5 beinhalten im vorliegenden Ausführungsbeispiel jeweils eine längs verlaufende Nut, in der ein sägezahnförmiger Einsatz 6 aufgenommen ist. Der Einsatz 6 kann in der genannten Nut durch Einstecken befestigt und gegebenenfalls durch Verstemmen oder Einkleben gegen Verschieben gesichert werden. Auch eine Befestigung des Einsatzes 6 mit Stiften oder Schrauben ist selbstverständlich möglich. Zudem weist das Profil 2 einen von der Mitte des Profilbodens 3 vertikal nach oben ragenden Mittelsteg 4 auf. Auf den oberen Kanten der sägezahnförmigen Einsätze liegen die Platten 1 auf und werden auf diese Weise in der erwähnten schuppenartigen Anordnung gestützt. Die Höhe der "Zähne" ist der Dicke der Platten 1 angepasst und ist so gewählt, dass sich die Platten 1 nicht berühren. Jede Platte 1 überragt die unter ihr liegende Platte 1 um ein Stück und ragt somit nach unten auch über den sie stützenden "Zahn" hinaus. In der untersten Reihe kann der stützende "Zahn" bis ganz an den unteren Plattenrand reichen. Seitlich über die Plattenränder abfliessendes Regen- oder Schmelzwasser wird vom Profil 2 aufgenommen und vorzugsweise in eine Dachrinne 12 geleitet. Der Mittelsteg 4 dient einerseits zur Versteifung des Profils 2 und andererseits hindert er die Platten 1 daran, sich in unerwünschter Weise seitlich zu verschieben und benachbarte Platten 1 zu berühren. Ferner wirkt der Mittelsteg 4 auch als Labyrinthdichtung gegen Einblasen von Regenwasser. Das Profil 2 kann beispielsweise durch Poltrudieren hergestellt sein und aus einem glasfaserverstärkten Kunststoff bestehen. Selbstverständlich kann das Profil auch aus einem Metall, vorzugsweise aus Aluminium, beispielsweise durch Strangpressen hergestellt werden. Die sägezahnförmigen Einsätze 6 können aus Gummi, Kunststoff, Metall oder anderem geeigneten Material bestehen.

Alternativ kann das Profil 2 auch aus Blech durch Abkanten hergestellt sein. Zu diesem Zweck kann ein Blechstreifen etwa W-förmig abgekantet werden. Anstelle der sägezahnförmigen Einsätze 6 können die Seitenwände eines solchen Profils eingeschnitten und bereichsweise umgebogen werden, so dass jede Seitenwand eine sägezahnförmige Kontur hat.

Die Profile 2 liegen im dargestellten Beispiel auf herkömmlichen Dachlatten 8 auf. In Richtung zur Dachrinne 12 hin sind sie durch Haken 9 gehalten, die an den Dachlatten 8 befestigt sind. Die Haken 9 können aus kunststoffbeschichtetem Metall, glasfaserverstärktem Kunststoff oder anderen geeigneten Materialien bestehen. Die Haken 9 verhindern ein unmittelbares Aufeinanderliegen der Bauelemente.

Wie man in der Figur erkennt, sind die Abstände der Dachlatten 8 so gewählt, dass jede Platte 1 mit ihrem oberen Rand über eine Dachlatte 8 ragt. Dadurch wird erreicht, dass sich die Platte 1 bei Belastung, beispielsweise durch Betreten, nur so stark durchbiegt, bis sie auf der Dachlatte 8 aufliegt. Durch diese Massnahme können insbesondere grosse Platten vor übermässiger Durchbiegung oder Bruch geschützt werden.

Die beschriebene Vorrichtung erlaubt es, jede einzelne Platte 1 auszuwechseln, ohne benachbarte Platten 1 zu entfernen. Der obere Rand jeder Platte 1 ist um einen Abstand 10 vom nächsten "Zahn" des Einsatzes 6 entfernt, wobei der Abstand 10 grösser ist als die Länge 11 des Schenkels des Hakens 9. Zum Ausbauen kann also die Platte 1 so weit nach oben geschoben werden, dass sie unten aus den Haken 9 gehoben und dann nach unten herausgezogen werden kann.

Im vorangehend beschriebenen Ausführungsbeispiel ist ganz allgemein von flachen, plattenförmigen Bauelementen die Rede. In besonders bevorzugter Weise können diese Bauelemente als photovoltaische Elemente ausgebildet werden. Diese können mit wenigen kostengünstigen Bauteilen auf konventionelle Unterkonstruktionen montiert werden, vorzugsweise auf hinterlüftete, um den Wirkungsgrad der Solarzellen durch möglichst tiefe Temperaturen zu steigern. Nebst der Elektrizitätserzeugung haben die Bauelemente die Funktion einer witterungsbeständigen Dach- oder Fassadenhaut, wie Dachziegel, Schiefer, Faserzementplatten, Keramikplatten etc. Die beschriebene, erfindungsgemässe Vorrichtung ist geeignet verschiedenste photovoltaische Module einzusetzen. Es können monokristalline, polykristalline, wie auch Dünnschicht-Solarzellen (amorph, nanokristallin, microkristallin, CIS etc.) unterschiedlicher Bauart, Grösse und Farbe verwendet werden.

Die Dimensionen der einzelnen Bauelemente sind von einigen Quadratdezimetern bis zur Grösse von mehreren Quadratmetern frei wählbar. Somit können die Bauelemente der Dach- oder Fassadengrösse, bestimmten baulichen Gegebenheiten und den ästhetischen Gesichtspunkten exakt angepasst werden.

Die erfindungsgemässe Vorrichtung lässt im weiteren auch unterschiedliche Aufbauten von rahmenlosen, aber selbsttragenden photovoltaischen Modulen als Bauelemente zu, wie transparente und opake Glas / Folien-Laminate, Glas / Glas-Laminate, photovoltaische Elemente aus Giessharz und auch rahmenlose Standard-Laminate. Die beschriebene Vorrichtung kann ebenfalls als solarthermische Flachkollektoren ausgebildete Bauelemente enthalten. Ferner können Bauelemente eingesetzt werden, die als normale Glasplatten und Blindplatten etc ausgebildet sind, beispielsweise zur Realisierung von Kamindurchführungen, Dachfenstern oder zur Umrahmung von Lüftungsrohren.

Die Montage des photovoltaischen Dach- und Fassadensystems ist einfach und schnell und somit kostengünstig. Da keine aussergewöhnlichen Unterkonstruktionen notwendig sind und nur wenige einfache Teile auf eine konventionelle Unterkonstruktion aufgebracht werden müssen, kann die Montage von instruiertem Fachpersonal des konventionellen Dach- und Fassadenbaus ausgeführt werden. Der nachträgliche Ausbau und Wiedereinbau der einzelnen Bauelemente zu Reparaturzwecken oder zur Erweiterung der Anlage ist ebenfalls sehr einfach auszuführen.

Wenn die Bauelemente photovoltaische Module enthalten oder als solche ausgebildet sind, wird die elektrische Verschaltung der einzelnen photovoltaischen Module untereinander vorzugsweise gleichzeitig mit dem Verlegen der Bauelemente erstellt. Das bedingt ein elektrisches Anschlusssystem mit berührungssicheren Steckverbindungen, so dass auch diese Arbeiten vom oben erwähnten Fachpersonal ausgeführt werden können. Die elektrischen Sammelleitungen, elektrischen Sammelkästen, Hauptleitungen, Erdungsleitungen etc. werden zumeist vorgängig von einem Fachelektriker installiert.

Weil die erfindungsgemässe Vorrichtung für konventionelle Unterkonstruktionen konzipiert ist, kann sie beliebig mit anderen Dach- und Fassadeneindeckungen, wie z.B. Dachziegeln, Schiefern, Faserzementplatten, Keramikplatten etc. kombiniert werden.

## Patentansprüche

1. Vorrichtung mit flachen, plattenförmigen Bauelementen (1), insbesondere zur Verkleidung von Schrägdächern oder Fassaden, bei der Reihen von untereinander angeordneten, sich schuppenartig überlappenden Bauelementen (1) befestigt sind, wobei jeweils im Bereich zwischen nebeneinander liegenden Reihen von Bauelementen (1) unterhalb der Bauelemente (1) ein Profil (2) angeordnet ist, welches einen nach oben offenen Kanal bildet, um neben den Bauelementen abfliessendes Wasser aufzunehmen und abzuleiten und wobei das Profil sägezahnartig geformte seitliche Teile (6) aufweist, auf denen die Bauelemente (1) in ihrer schuppenartigen Anordnung aufliegen, **dadurch gekennzeichnet, dass** die sägezahnartig geformten seitlichen Teile (6) in im Profil (2) vorgesehenen Längsnuten aufgenommen sind.

2. Vorrichtung mit flachen, plattenförmigen Bauelementen (1), insbesondere zur Verkleidung von Schrägdächern oder Fassaden, bei der Reihen von untereinander angeordneten, sich schuppenartig überlappenden Bauelementen (1) befestigt sind, wobei jeweils im Bereich zwischen nebeneinander liegenden Reihen von Bauelementen (1) unterhalb der Bauelemente (1) ein Profil (2) angeordnet ist, welches einen nach oben offenen Kanal bildet, um neben den Bauelementen abfliessendes Wasser aufzunehmen und abzuleiten und wobei das Profil sägezahnartig geformte seitliche Teile (6) aufweist, auf denen die Bauelemente (1) in ihrer schuppenartigen Anordnung aufliegen, **dadurch gekennzeichnet, dass** die sägezahnartig geformten seitlichen Teile (6) Längsnuten aufweisen, mit denen sie auf das Profil (2) aufgesteckt sind.

3. Vorrichtung nach einem der vorangehenden Ansprüche, **dadurch gekennzeichnet, dass** die sägezahnartig geformten seitlichen Teile (6) aus Gummi oder Kunststoff bestehen.

4. Vorrichtung nach einem der vorangehenden Ansprüche, **dadurch gekennzeichnet, dass** das Profil (2) einen von einem Profilboden (3) nach oben abragenden Steg (4) hat.

5. Vorrichtung nach einem der vorangehenden Ansprüche, **dadurch gekennzeichnet, dass** das Profil (2) aus verstärktem Kunststoff besteht und vorzugsweise durch Poltrudieren hergestellt ist.

6. Vorrichtung nach einem der Ansprüche 1 bis 4, **dadurch gekennzeichnet, dass** das Profil (2) aus Metallblech besteht und durch Abkanten hergestellt ist.

7. Vorrichtung nach einem der vorangehenden Ansprüche, **dadurch gekennzeichnet, dass** die Profile (2) auf mindestens annähernd rechtwinklig zu ihnen verlaufenden Trägem (8) auf liegen und dass Haken (9) vorhanden sind, die mit einem Ende an einem der Träger (8) befestigt sind und mit dem anderen Ende den unteren Rand eines Bauelementes (1) umgreifen.

8. Vorrichtung nach einem der vorangehenden Ansprüche, **dadurch gekennzeichnet, dass** mindestens ein Teil der Bauelemente (1) als photovoltaische Elemente ausgebildet sind oder solche enthalten.

9. Vorrichtung nach einem der vorangehenden Ansprüche, **dadurch gekennzeichnet, dass** das Profil (2) über die ganze Höhe der Vorrichtung durchgehend wasserführend ist.

## Claims

1. Device with flat, panel-shaped building elements (1), in particular for cladding pitched roofs or facades, whereby rows of building elements (1) are secured one underneath the other, overlapping in a scale-type arrangement with a section (2) disposed underneath the building elements (1) in each region between adjacently lying rows of building elements (1) forming a channel open at the top in order to catch and drain water flowing down next to the building elements, which section has side parts (6) of a saw-tooth design on which the building elements (1) lie in their scale-type arrangement, **characterised in that** the side parts (6) with the saw-tooth design are accommodated in longitudinal grooves provided in the section (2).

2. Device with flat, panel-shaped building elements (1), in particular for cladding pitched roofs or facades, whereby rows of building elements (1) are secured one underneath the other, overlapping in a scale-type arrangement with a section (2) disposed underneath the building elements (1) in each region between adjacently lying rows of building elements (1), forming a channel open at the top in order to catch and drain water flowing down next to the building elements, which section has side parts (6) of a saw-tooth design on which the building elements (1) lie in their scale-type arrangement, **characterised in that** the side parts (6) of a saw-tooth design have longitudinal grooves by means of which they push-fit on the section (2).

3. Device as claimed in one of the preceding claims, **characterised in that** the side parts (6) of a saw-tooth design are made from rubber or plastic.

4. Device as claimed in one of the preceding claims, **characterised in that** the section (2) has a web (4) projecting upwards from a section base (3).

5. Device as claimed in one of the preceding claims, **characterised in that** the section (2) is made from reinforced plastic and is preferably made by a pultrusion process.

6. Device as claimed in one of claims 1 to 4, **characterised in that** the section (2) is made from sheet metal and is produced by a bending process.

7. Device as claimed in one of the preceding claims, **characterised in that** the sections (2) lie on supports (8) extending at least more or less at a right angle to them and hooks (9) are provided, which are attached to one of the supports (8) by one end, whilst the other ends engage round the bottom edge of a building element (1).

8. Device as claimed in one of the preceding claims, **characterised in that** at least some of the building elements (1) are provided in the form of or contain photovoltaic elements.

9. Device as claimed in one of the preceding claims, **characterised in that** the section (2) carries water continuously across the entire height of the device.

## Revendications

1. Dispositif comprenant des éléments de construction plats, en forme de plaque (1), en particulier pour le revêtement de toits inclinés ou de façades, où des rangées d'éléments de construction (1) disposés les uns en dessous des autres, se recouvrant en forme d'écailles, sont fixées, où est disposé à chaque fois dans la zone entre des rangées juxtaposées d'éléments de construction (1) en dessous des éléments de construction (1) un profilé (2) qui forme un canal ouvert vers le haut pour recueillir et évacuer l'eau s'écoulant à côté des éléments de construction, et où le profilé présente des parties latérales (6) réalisées en forme de dents de scie, sur lesquelles reposent les éléments de construction (1) dans leur disposition en forme d'écailles, **caractérisé en ce que** les parties latérales (6) formées en dents de scie sont reçues dans des rainures longitudinales prévues dans le profilé (2).

2. Dispositif comprenant des éléments de construction plats, en forme de plaque (1), en particulier pour le revêtement de toits inclinés ou de façades, où des rangées d'éléments de construction (1) disposés les uns en dessous des autres, se recouvrant en forme d'écailles, sont fixées, où est disposé à chaque fois dans la zone entre des rangées juxtaposées d'éléments de construction (1) en dessous des éléments de construction (1) un profilé (2) qui forme un canal ouvert vers le haut pour recueillir et évacuer l'eau s'écoulant à côté des éléments de construction, et où le profilé présente des parties latérales (6) en forme de dents de scie sur lesquelles reposent les éléments de construction (1) dans leur disposition en forme d'écailles, **caractérisé en ce que** les parties latérales (6) formées en dents de scie présentent des rainures longitudinales au moyen desquelles elles sont emboîtées sur le profilé (2).

3. Dispositif selon l'une des revendications précédentes, **caractérisé en ce que** les parties latérales (6) en forme de dents de scie sont réalisées en caoutchouc ou en matériau synthétique.

4. Dispositif selon l'une des revendications précédentes, **caractérisé en ce que** le profilé (2) possède une baguette (4) faisant saillie vers le haut à partir d'un fond de profilé (3).

5. Dispositif selon l'une des revendications précédentes, **caractérisé en ce que** le profilé (2) est réalisé en matériau synthétique renforcé et est fabriqué de préférence par poltrusion.

6. Dispositif selon l'une des revendications 1 à 4, **caractérisé en ce que** le profilé (2) est constitué de tôle métallique et est réalisé par pliage.

7. Dispositif selon l'une des revendications précédentes, **caractérisé en ce que** les profilés (2) reposent sur des supports (8) s'étendant au moins approximativement perpendiculairement à ceux-ci, et **en ce que** des crochets (9) sont prévus, qui sont fixés avec une extrémité à l'un des supports (8) et qui entourent avec l'autre extrémité le bord inférieur d'un élément de construction (1).

8. Dispositif selon l'une des revendications précédentes, **caractérisé en ce qu'**au moins une partie des éléments de construction (1) sont réalisés comme éléments photovoltaïques ou contiennent de tels éléments.

9. Dispositif selon l'une des revendications précédentes, **caractérisé en ce que** le profilé (2) est réalisé pour guider l'eau d'une manière continue sur toute la hauteur du dispositif.
